# EUROPÄISCHE PATENTSCHRIFT

(11) **EP 1 658 166 B1**
(45) Veröffentlichungstag und Bekanntmachung des Hinweises auf die Patenterteilung: **13.06.2012**
(21) Anmeldenummer: 04764135.2
(22) Anmeldetag: 14.08.2004
(51) Int. Cl.: B29C 31/00

(54) **POLSTERTEIL, INSBESONDERE AUSSTATTUNGSTEIL FÜR DEN INNENRAUM EINES KRAFTFAHRZEUGS, VERFAHREN ZU SEINER HERSTELLUNG UND SITZ**
UPHOLSTERY PART, IN PARTICULAR EQUIPMENT FOR THE INTERIOR OF A MOTOR VEHICLE, METHOD FOR PRODUCING SAID PART AND SEAT
PIECE DE REMBOURRAGE, EN PARTICULIER PIECE D'EQUIPEMENT POUR L'HABITACLE D'UN VEHICULE AUTOMOBILE, PROCEDE DE REALISATION ET SIEGE

(30) Priorität: 20.08.2003 DE 10338215
(43) Veröffentlichungstag der Anmeldung: 24.05.2006
(73) Patentinhaber: Johnson Controls GmbH, 51399 Burscheid (DE)
(72) Erfinder: SAULNIER, Philippe, F-67370 Gimbrett-Brestett (FR)
(74) Vertreter: Hemmelmann, Klaus
(86) Internationale Anmeldenummer: PCT/EP2004/009143
(87) Internationale Veröffentlichungsnummer: WO 2005/018916

(56) Entgegenhaltungen:
- EP-A- 0 386 818
- EP-A- 1 190 828
- WO-A-96/35562
- DE-A- 2 157 921
- DE-A- 10 255 453
- DE-A- 19 521 315
- DE-A1- 1 704 919
- US-A- 3 889 037
- US-A- 5 662 996
- US-A- 6 071 619
- US-A1- 2003 098 598
- US-B1- 6 444 303
- PATENT ABSTRACTS OF JAPAN Bd. 2000, Nr. 10, 17. November 2000 (2000-11-17) & JP 2000 184936 A (TOYO TIRE & RUBBER CO LTD), 4. Juli 2000 (2000-07-04)

## Beschreibung

Die Erfindung betrifft einen Fahrzeugsitz mit einem Polsterteil mit einem Schaumstoffkörper und einer zumindest in Teilbereichen seiner Oberfläche angeordneten Schutzschicht, welche einen als Flüssigkeit applizierten und ausgehärteten Werkstoff enthält, wobei die Schutzschicht auf reibbelasteten Teilbereichen des Polsterteils angeordnet ist und in den Werkstoff eingebettete Fasern enthält.

### Stand der Technik

Ein Fahrzeugsitz der eingangs genannten Art ist aus der Offenlegungsschrift DE 1 704 919 bekannt. Diese Schrift offenbart ein aus Polyurethan bestehendes Sitzteil für einen Fahrzeugsitz, bei dessen Herstellung eine Watte- oder Vliesschicht aus natürlichen, künstlichen oder synthetischen Fasern in das Schäumwerkzeug eingelegt wird. Beim Aufschäumen der nachfolgend zugeführten schäumfähigen Masse durchtränkt das Polyurethan die Fasern, so dass diese später darin eingebettet sind.

Ein weiteres Polsterteil für einen Fahrzeugsitz ist aus der Druckschrift DE 44 38 018 A1 bekannt. Der dort offenbarte Flugzeugsitz ist mit einem Sitzpolster ausgestattet, das an seiner Unterseite mit einer gewebeartigen Schutzschicht und, nach einer besonderen Ausführung, einer zusätzlichen Zwischenschicht aus einem Gewirke, Netz oder Gitter versehen ist. Diese Schichten dienen dazu, das Polsterteil bei Benutzung des Sitzes und den damit verbundenen mechanischen Belastungen vor einer Beschädigung durch die metallische Tragstruktur des Sitzes oder einem im Polster befindlichen Federkern zu schützen.

Im genannten druckschriftlichen Stand der Technik wird die Schutzschicht mit dem Polsterteil über voneinander distanzierte Klebestellen verbunden. Aus der Praxis der Herstellung von Kraftfahrzeugsitzen ist ferner bekannt, zuvor gefertigte Gewebezuschnitte in die Schäumform einzulegen und durch Umschäumen an das Polsterteil zu binden.

Beide Verfahren führen zu einem brauchbaren Ergebnis, sind jedoch sehr arbeitsaufwändig.

Die japanische Patentanmeldung JP-A-2000184936 offenbart einen Polsterkörper für einen Fahrzeugsitz, der im Wesentlichen aus einem Polyurethanschaum besteht. Die Vorderseite des Polsterkörpers, auf welcher bei Benutzung des Sitzes der Körper des Sitzinsassen aufliegt, ist mit einer Beschichtung aus einem hochpolymeren Werkstoff versehen, welche durch Aufsprühen in flüssigem Zustand appliziert wird und nachfolgend aushärtet. Durch dieses Vorgehen kann die vom Sitzinsassen spürbare Härte des Polsterkörpers beeinflusst werden.

Bei den in US-A 6,444,303 und US-A-2003/098598 beschriebenen Fahrzeugsitzen erstrecken sich die Beschichtungen nicht über die in Kontakt mit der Metallstruktur tretenden Rückseiten des Polsterkörpers. Hinweise zur Herstellung von Polsterteilen aus Polyurethan gibt ferner die Patentschrift US-A-5,662,996.

### Aufgabe

Der Erfindung liegt die Aufgabe zugrunde, den Verschleiß des Fahrzeugsitzes zu reduzieren.

### Lösung

Die Aufgabe wird bei einem gattungsgemäßen Fahrzeugsitz erfindungsgemäß dadurch gelöst, dass die Reibung gegen die Metallstruktur des Fahrzeugsitzes erfolgt und die Schutzschicht ein Polymerisat in Form eines radikalisch polymerisierten Kunststoff, nämlich Polyvinylacetat (PVA), enthält. Besonders geeignet ist ein Polyvinylacetat (PVA), das als Flüssigkeit mit einer Viskosität von 0,1 bis 1,0 Pa s / 20°C applizierbar ist.

Der Schaumstoffkörper als solcher besteht mit Vorteil aus einem offenporigen Kunststoffschaum, insbesondere aus Polyurethan, der ein angenehmes Sitzklima aufweist. Da die Schutzschicht auf dem Schaumstoffkörper mit Vorteil nur partiell und nicht auf der dem Sitzinsassen zugewandten Oberfläche aufgebracht wird, bleibt das Sitzklima weitgehend unbeeinträchtigt.

Zur Verbesserung des Abriebverhaltens kann die Schutzschicht ferner Fasern aus Polyamid oder Glas enthalten. Die verwendeten Fasern bestehen mit Vorteil aus Faserstücken, vorzugsweise mit einer Länge von 10 bis 100 mm, bevorzugt 25 bis 75 mm, insbesondere etwa 50 mm und sind im Wesentlichen regellos in der Schutzschicht angeordnet. Der Fasergehalt in der Schutzschicht beträgt dabei 5 bis 20 Gew.%, insbesondere etwa 10 Gew.-%. In der Regel ist es ausreichend, wenn die Schutzschicht eine größte Dicke von 0,05 bis 0,5 mm, bevorzugt 0,1 bis 0,25 mm aufweist.

Eine derartige Schutzschicht kann, im Gegensatz zu den aus dem Stand der Technik bekannten Ausführungen, automatisiert auf die betreffenden Oberflächen des Polsterteils aufgetragen werden.

Ein geeignetes Verfahren zur Herstellung eines Polsterteils, bei welchem eine verschäumbare Masse in ein Formwerkzeug eingefüllt, die Masse zu einem Formteil verschäumt und nachfolgend entformt wird, ist dadurch gekennzeichnet, dass das Polsterteil zumindest in Teilbereichen seiner Oberfläche mit einer in flüssiger Form applizierbaren Schutzschicht aus einem aushärtbaren Werkstoff ausgestattet wird.

Der aushärtbare Werkstoff wird dabei vorzugsweise vor dem Einfüllen der verschäumbaren Masse zumindest auf Teilbereich der Werkzeugoberfläche und/oder nach dem Verschäumen der Masse auf das Formteil aufgebracht, insbesondere aufgesprüht.

Dabei können dem aushärtbaren Werkstoff Fasern, insbesondere Faserstücke beigefügt werden, wobei die Fasern einem Applikationswerkzeug mit Vorteil als Endlosfasern (Rovings) zugeführt, dort geschnitten und nachfolgend als Faserstücke appliziert werden.

Zeitgleich kann dem Applikationswerkzeug der aushärtbare Werkstoff in flüssiger Form zugeführt werden, welcher die Fasern oder Faserstücke in ihrer Lage auf der Werkzeugoberfläche und/oder dem Formteil fixiert.

Die Applikation des aushärtbaren Werkstoffs kann in mehreren Lagen erfolgen, wobei die Anzahl der Lagen örtlich unterschiedlich ist. Dabei kann jede Lage eine gleiche Dicke aufweisen, die für die Applikation besonders günstig ist, aber dennoch die Festigkeit der Schutzschicht den örtlichen Anforderungen angepaßt werden. Selbstverständlich ist es auch möglich, den Fasergehalt in der Schutzschicht entsprechend anzupassen.

### Figuren

Die Figuren stellen beispielhaft und schematisch eine Ausführungen der Erfindung dar.

Es zeigen:
- Fig. 1: die Applikation einer Schutzschicht auf ein bereits vorgeformtes Polsterteil bei der Fertigung eines Fahrzeugsitzes nach einer ersten Ausbildung der Erfindung;
- Fig. 2: den Auftrag einer aushärtbaren Flüssigkeit nach einem weiteren Verfahren zur Herstellung eines erfindungsgemäßen Fahrzeugsitzes;
- Fig. 3: ein entsprechend Verfahren nach Fig. 2 gefertigtes Polsterteil.

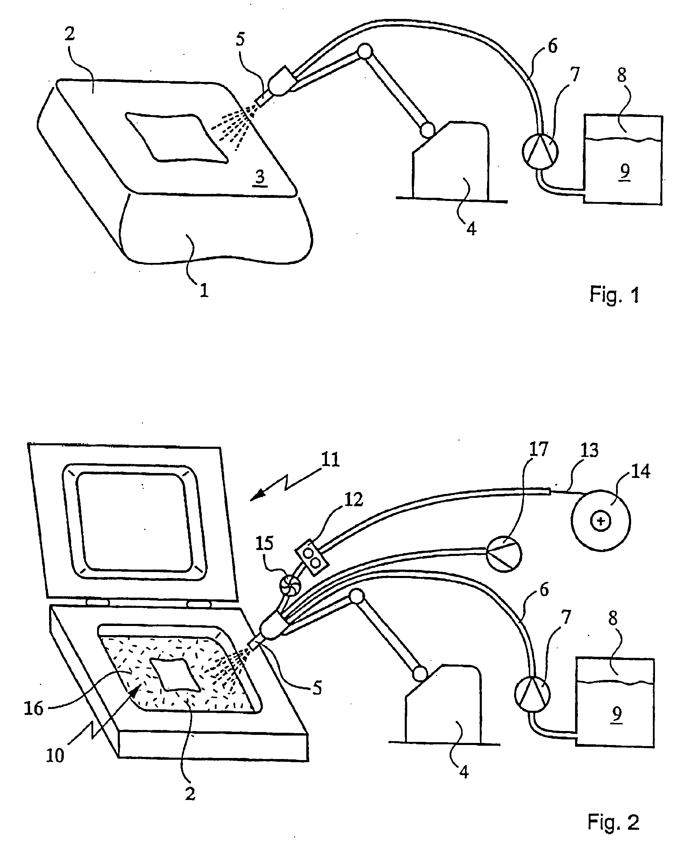

Bei dem in Fig. 1 dargestellten Vorgehen wird zunächst ein Polsterteil 1 in konventioneller Weise durch Verschäumen eines Polyol/Isozyanat-Gemisches in einer Schäumform hergestellt und entformt. Die Schaumstruktur kann nachfolgend in gleichfalls bekannter Weise durch Quetschen des Polsterteils so verändert werden, dass dieses im Wesentlichen offenporige, also miteinander kommunizierende Zellen aufweist.

Um das Polsterteil 1 in den rückseitigen Bereichen 2, in denen es später mit der Metallstruktur des Fahrzeugsitzes in Berührung kommt, mit einer Schutzschicht 3 zu versehen, wird mittels eines Industrierobotors 4 eine Düse 5 über das Polsterteil 1 bewegt, die über eine Schlauchleitung 6 und eine Pumpe 7 aus einem Tank 8 mit einem aushärtbaren, als Flüssigkeit 9 applizierbaren Polyvinylacetat (PVA) gespeist wird. Die Flüssigkeit dringt in die obersten Bereiche des Polsterteils 1 ein und bildet nach dem Aushärten eine abriebfeste, mit dem Polsterteil 1 dauerhaft verbundene Schutzschicht 3 aus, deren Dicke weniger als 0,1 mm betragen kann. Falls örtlich größere Dicken erforderlich sind, können diese durch mehrfaches Besprühen des Polsterteils erzeugt werden. Bei entsprechender Leistungsfähigkeit des Industrierobotors 4 können naturgemäß nicht nur ebene Flächen, sondern auch dreidimensionale Formkörper mit einer entsprechenden Schutzschicht 3 versehen werden.

Beim Verfahren nach Fig. 2 wird die später zur Schutzschicht 3 aushärtende Flüssigkeit 9 vor dem Einfüllen der verschäumbaren Masse örtlich in die Kavität 10 eines mehrteiligen Schäumwerkzeugs 11 eingesprüht, auf deren Oberfläche sich ein klebriger Film ausbildet. Mittels einer Fördereinrichtung 12 werden der Düse 5 ferner über eine Leitung endlose Faserstränge (Rovings) 13 von einem Haspel 14 zugeführt. In einem Schneidwerk 15 werden diese vor dem Eintritt in die Düse 5 zu Faserstücken 16 zerschnitten und gemeinsam mit der Flüssigkeit 9 appliziert. Über ein Gebläse 17 in die Düse 5 eingespeiste Druckluft kann den Auftrag auf die Oberfläche des Schäumwerkzeugs 11 dabei unterstützen. Bei Bedarf wird vor dem Aufsprühen der aushärtbaren Flüssigkeit noch ein Trennwachs auf die Oberfläche der Kavität 10 aufgebracht, das die spätere Entformung erleichtert. Trennwachs und Flüssigkeit 9 können gegebenenfalls vom gleichen Industrieroboter 4 nacheinander appliziert werden.

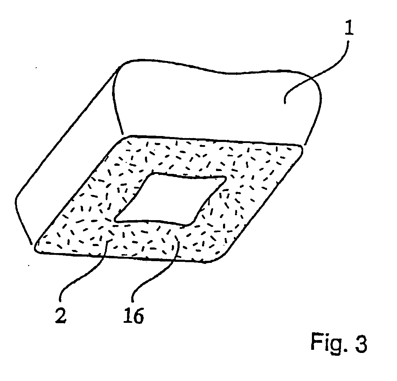

Nach dem Schließen des Schäumwerkzeugs 11 wird die verschäumbare Masse in die Kavität 10 eingefüllt. Das entformte Polsterteil (Fig. 3) ist an den betreffenden Bereichen 2 mit der Schutzschicht 3 versehen, in welche die Faserstücke 16 regellos eingebettet sind. Die Verbindung zwischen Polsterteil 1 und Schutzschicht 3 ist ausreichend fest, um eine spätere Behandlung zum Öffnen der Zellstruktur zu überstehen.

Grundsätzlich ist es natürlich möglich, beide Verfahren nacheinander am gleichen Polsterteil anzuwenden.

### Bezugszeichen

- 1: Polsterteil
- 2: Bereich (Kontakt mit Metallstruktur des Sitzes)
- 3: Schutzschicht
- 4: Industrieroboter
- 5: Düse
- 6: Schlauchleitung
- 7: Pumpe
- 8: Tank
- 9: Flüssigkeit
- 10: Kavität
- 11: Schäumwerkzeug
- 12: Fördereinrichtung
- 13: Faserstrang (Roving)
- 14: Haspel
- 15: Schneidwerk
- 16: Faserstück
- 17: Gebläse

## Patentansprüche

1. Fahrzeugsitz mit einem Polsterteil (1) mit einem Schaumstoffkörper und einer zumindest in Teilbereichen seiner Oberfläche angeordneten Schutzschicht (3), welche einen als Flüssigkeit (9) applizierten und ausgehärteten Werkstoff enthält, wobei die Schutzschicht (3) auf reibbelasteten Teilbereichen (2) des Polsterteils (1) angeordnet ist und in den Werkstoff eingebettete Fasern enthält, **dadurch gekennzeichnet, dass** die Reibung gegen die Metallstruktur des Fahrzeugsitzes erfolgt und die Schutzschicht (3) ein Polymerisat in Form eines radikalisch polymerisierten Kunststoff, nämlich Polyvinylacetat (PVA), enthält.

2. Fahrzeugsitz nach Anspruch 1, **dadurch gekennzeichnet, dass** der Schaumstoffkörper aus einem offenporigen Kunststoffschaum, insbesondere aus Polyurethan, besteht.

3. Fahrzeugsitz nach einem der vorhergehenden Ansprüche, **dadurch gekennzeichnet, dass** die Schutzschicht (3) Fasern aus Polyamid oder Glas enthält.

4. Fahrzeugsitz nach Anspruch 3, **dadurch gekennzeichnet, dass** die Fasern aus Faserstücken (16), vorzugsweise mit einer Länge von 10 bis 100 mm, bevorzugt 25 bis 75 mm, insbesondere etwa 50 mm, bestehen.

5. Fahrzeugsitz nach Anspruch 4, **dadurch gekennzeichnet, dass** die Faserstücke (16) im Wesentlichen regellos in der Schutzschicht (3) angeordnet sind.

6. Fahrzeugsitz nach einem der Ansprüche 3 bis 5, **dadurch gekennzeichnet, dass** der Fasergehalt in der Schutzschicht (3) 5 bis 20 Gew.-%, insbesondere etwa 10 Gew.-%, beträgt.

7. Fahrzeugsitz nach einem der vorhergehenden Ansprüche, **dadurch gekennzeichnet, dass** die größte Dicke der Schutzschicht (3) 0,05 bis 0,5 mm, bevorzugt 0,1 bis 0,25 mm, beträgt.

## Claims

1. Vehicle seat having an upholstery part (1) with a foam body and a protective layer (3) arranged at least in partial regions of its surface, which protective layer (3) contains a material which is applied as a liquid and cured the protective layer (3) being arranged on partial regions (2) of the upholstery part (1) that are subjected to frictional loading, and containing fibers which are embedded in the material, **characterized in that** the friction takes place against the metal structure of the vehicle seat and the protective layer (3) contains a polymer in the form of a radically polymerizable polymer, namely polyvinyl acetate (PVA).

2. Vehicle seat upholstery part according to Claim 1, **characterized in that** the foam body consists of an open-cell polymer foam, in particular polyurethane.

3. Vehicle seat according to one of the preceding claims, **characterized in that** the protective layer (3) contains fibers of polyamide or glass.

4. Vehicle seat according to Claim 3, **characterized in that** the fibers comprise pieces of fiber (16), preferably with a length of 10 to 100 mm, with preference 25 to 75 mm, in particular approximately 50 mm.

5. Vehicle seat according to Claim 4, **characterized in that** the pieces of fiber (16) are arranged substantially randomly in the protective layer (3).

6. Vehicle seat according to one of Claims 3 to 5, **characterized in that** the fiber content in the protective layer (3) is 5 to 20% by weight, in particular approximately 10% by weight.

7. Vehicle seat according to one of the preceding claims, **characterized in that** the greatest thickness of the protective layer (3) is 0.05 to 0.5 mm, with preference 0.1 to 0.25 mm.

## Revendications

1. Siège de véhicule doté d'une partie (1) formant capitonnage, dotée d'un corps de mousse et d'une couche de protection (3) disposée sur au moins certaines parties de sa surface et qui contient un matériau appliqué sous forme liquide (9) avant d'être durci, la couche de protection (3) étant disposée sur les parties (2) de la partie (1) formant capitonnage sollicitées en friction et contenant des fibres incorporées dans le matériau,
**caractérisé en ce que**
le frottement a lieu avec la structure métallique du siège de véhicule et la couche de protection (3) contient un polymère qui présente la forme d'une matière synthétique polymérisée radicalairement, à savoir le poly(acétate de vinyle) (PVA).

2. Siège de véhicule selon la revendication 1, **caractérisé en ce que** le corps en mousse est constitué d'une mousse de matière synthétique à pores ouverts et en particulier de polyuréthane.

3. Siège de véhicule selon l'une des revendications précédentes, **caractérisé en ce que** la couche de protection (3) contient des fibres de polyamide ou de verre.

4. Siège de véhicule selon la revendication 3, **caractérisé en ce que** les fibres sont constituées de morceaux (16) de fibres dont la longueur est de préférence de 10 à 100 mm, de préférence de 25 à 75 mm et en particulier d'environ 50 mm.

5. Siège de véhicule selon la revendication 4, **caractérisé en ce que** les morceaux (16) de fibres sont disposés de manière essentiellement irrégulière dans la couche de protection (3).

6. Siège de véhicule selon l'une des revendications 3 à 5, **caractérisé en ce que** la teneur en fibres de la couche de protection (3) est de 5 à 20 % en poids et en particulier d'environ 10 % en poids.

7. Siège de véhicule selon l'une des revendications précédentes, **caractérisé en ce que** la plus grande épaisseur de la couche de protection (3) est de 0,05 à 0,5 mm et de préférence de 0,1 à 0,25 mm.
